# EUROPÄISCHE PATENTSCHRIFT

(11) **EP 3 523 010 B1**
(45) Veröffentlichungstag und Bekanntmachung des Hinweises auf die Patenterteilung: **23.03.2022**
(21) Anmeldenummer: 17786879.1
(22) Anmeldetag: 06.10.2017
(51) Int. Cl.: B01D 46/10, B01D 46/42, B01D 46/52

(54) **FILTERELEMENT, INSBESONDERE ZUR GASFILTRATION**
FILTER ELEMENT, IN PARTICULAR FOR GAS FILTRATION
ÉLÉMENT FILTRANT, EN PARTICULIER POUR LA FILTRATION DE GAZ

(30) Priorität: 07.10.2016 DE 102016011950
(43) Veröffentlichungstag der Anmeldung: 14.08.2019
(73) Patentinhaber: MANN+HUMMEL GmbH, 71636 Ludwigsburg (DE)
(72) Erfinder: NEEF, Pascal, 78647 Trossingen (DE); DONAUER, Nadine, 70736 Fellbach (DE)
(74) Vertreter: Mann + Hummel Intellectual Property
(86) Internationale Anmeldenummer: PCT/EP2017/075513
(87) Internationale Veröffentlichungsnummer: WO 2018/065590

(56) Entgegenhaltungen:
- DE-A1-102012 005 731
- US-A1- 2009 320 423
- US-A1- 2010 258 493
- US-A1- 2016 236 128

## Beschreibung

### Technisches Gebiet

Die Erfindung bezieht sich auf eine Filtereinrichtung mit einem Filterelement, insbesondere zur Gasfiltration, beispielsweise für einen Luftfilter, nach dem Oberbegriff des Anspruches 1.

### Stand der Technik

In der DE 10 2010 025 971 B4 wird ein Luftfilter beschrieben, der zur Filtration der Ansaugluft von Brennkraftmaschinen eingesetzt wird. Der Luftfilter umfasst einen quaderförmigen Filtermediumkörper, der als Faltenfilter ausgebildet ist und Klebstoffraupen zur Separierung der Roh- von der Reinseite aufweist.

Auch in der EP 0 863 785 B1 wird ein Filterelement mit einem als Faltenfilter ausgebildeten, quaderförmigen Filtermediumkörper beschrieben. Der Filtermediumkörper ist von einem Rahmen eingefasst, der eine umlaufende Aufnahmetasche zur Aufnahme eines Dichtungselementes aufweist. Die Aufnahmetasche mit dem Dichtungselement steht seitlich über die Seitenwand des Filtermediumkörpers über.

Aus der US 2016/236 128 A1 ist ein Luftfilter mit einem Filterelement mit wechselseitig geschlossenen Kanälen und einer axialen Dichtgeometrie bekannt. Die Dichtanordnung am Filterelement weist konturierte gegenüberliegende Dichtflächen zum Verpressen zwischen Gehäuseteilen auf.

### Offenbarung der Erfindung

Der Erfindung liegt die Aufgabe zugrunde, eine Filtereinrichtung und ein Filterelement mit einfachen konstruktiven Maßnahmen wartungsfreundlich auszubilden, insbesondere den Eintrag lokaler Kräfte auf einen Filtermediumkörper des Filterelements während der Handhabung des Filterelements, insbesondere beim Einsetzen und Herausnehmen des Filterelements, zu reduzieren.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung mit Filterelement wird vorzugsweise zur Gasfiltration eingesetzt, beispielsweise als Luftfilter im Ansaugtrakt einer Brennkraftmaschine, insbesondere für einen Lastkraftwagen. Es kommt aber auch eine Verwendung des Filterelementes zur Flüssigkeitsfiltration in Betracht.

Das Filterelement umfasst einen Filtermediumkörper, der aus einem Filtermaterial gefertigt ist und an dem die Filtration stattfindet. An der Anströmseite und an mindestens einer weiteren Seite, insbesondere an der gegenüberliegenden Abströmseite, befindet sich jeweils ein Dichtungsmaterialstreifen an dem Filtermediumkörper, der an der betreffenden Seite mindestens teilweise umlaufend ausgebildet ist und vorzugsweise im Randbereich des Filtermediumkörpers liegt. Insbesondere an der Anströmseite läuft der Dichtungsmaterialstreifen durchgehend und vollständig um und bildet ein Dichtungselement zur Separierung der Rohseite, welche von der Anströmseite gebildet wird, von der Reinseite des Filterelementes, die von der Abströmseite gebildet wird. Bei der mindestens einen weiteren Seite, die mit einem Dichtungsmaterialstreifen versehen ist, handelt es sich vorzugsweise um die Abströmseite, an der der Dichtungsmaterialstreifen entweder mit Unterbrechung oder durchgehend umlaufend ausgebildet ist.

Mindestens ein Dichtungsmaterialstreifen an einer Seite ist Träger mindestens zweier überstehender Haltelaschen, die es ermöglichen, das Filterelement insbesondere auf manuelle Weise zu ergreifen und in ein aufnehmendes Filtergehäuse einzusetzen bzw. aus diesem herauszunehmen. Die Haltelaschen sind erfindungsgemäß aus dem Material des Dichtungstreifens ausgebildet, d.h. die Haltelaschen bestehen aus dem Material des Dichtungsstreifens. Geeignete Materialien für den Dichtungsstreifen bzw. für die Haltelaschen ist Kunststoff, bevorzugt Elastomere, besonders bevorzugt Polyurethan. Dies hat den Vorteil, dass die Haltelaschen besonders einfach herstellbar sind und zudem konstruktiv einfach ausgebildet ist. Die Haltelaschen sind zudem flexibel und sind beim Ein-und Ausbau nach Bedarf benutzerfreundlich reversibel verformbar. Ein zusätzlicher Vorteil davon, dass die Haltelaschen aus dem Material des Dichtungsstreifens bestehen und einteilig ausgebildet sind, ist die besonders einfache und kostengünstige Herstellung, da keine zusätzliche Prozesszeit notwendig ist. Die Kräfte für das Einsetzen bzw. Herausnehmen des Filterelements werden über die Haltelaschen auf den Dichtungsmaterialstreifen übertragen, wobei über den Dichtungsmaterialstreifen eine großflächige Kräfteverteilung auf den Filtermediumkörper erreicht wird. Auf diese Weise wird ein lokaler Eintrag hoher Kräfte auf den Filtermediumkörper vermieden, der zu einer Schädigung des Filtermaterials führen könnte. Zugleich ist die Handhabbarkeit des Filterelementes signifikant verbessert.

An dem Dichtungsmaterialstreifen befinden sich mindestens zwei Haltelaschen. Erfindungsgemäß sind mehrere Haltelaschen vorgesehen, beispielsweise mindestens zwei an gegenüberliegenden Seiten angeordnete Haltelaschen. Mindestens zwei Haltelaschen sind besonders vorteilhaft, um das Filterelement einfach und sicher in axialer Richtung ausbauen bzw. herausnehmen zu können. Bei mindestens zwei Haltelaschen ist das Moment, welches beim Herausnehmen auf das Filterelement wirkt und welches zum Verkanten des Filterelements beim Ausbau führen kann, kleiner im Vergleich zu dem Moment bei einer Haltelasche.

Die mindestens zwei Haltelaschen können in einer weiteren Ausführungsform in Umfangsrichtung versetzt zueinander angeordnet sein, wobei die mindestens zwei Haltelaschen zudem an gegenüberliegenden Seiten angeordnet sein können. Die versetzte Anordnung hat den zusätzlichen Vorteil einer konstruktiv einfachen, sicheren Einbaubarkeit. Durch die Anordnung der zwei Haltelaschen ist die Festlegung der Einbaulage auch beim Aus- und bei Wiedereinbau des Filterelements möglich. Hierdurch kann bei Ausund insbesondere bei Wiedereinbau desselben, bereits beladenen Filterelements dieselbe Einbaulage sichergestellt werden. Änderungen oder Abweichungen in der Einbaulage des Filterelements, insbesondere bei Wiedereinbau desselben Filterelements, können auf die Durchströmung und damit auf die Signalqualität eines möglichen Luftmassenmessers im Reinlufttrakt einen relevanten Einfluss haben.

Die mindestens zwei Haltelaschen befinden sich vorzugsweise an der Seite des Filtermediumkörpers mit durchgehendem, ohne Unterbrechung umlaufendem Dichtungsmaterialstreifen. Diese Ausführung ist insbesondere an der Anströmseite des Filtermediumkörpers vorgesehen. Es kommt aber auch eine Anordnung der mindestens zwei Haltelaschen an einem nicht-durchgehend ausgebildeten Dichtungsmaterialstreifen, beispielsweise an der Abströmseite in Betracht. Es können auch an verschiedenen Seiten Haltelaschen angeordnet sein.

Erfindungsgemäß erstrecken sich die Haltelaschen parallel zur Einschub- bzw. Entnahmerichtung des Filterelementes im Filtergehäuse; dementsprechend ragen die Haltelaschen in Einschub- bzw. Entnahmerichtung über den Dichtungsmaterialstreifen über. Die Haltelaschen haben vorzugsweise nur die Funktion, dass das Filterelement über die Haltelaschen in erleichterter Weise ergriffen werden kann, jedoch kommt den Haltelaschen keine Abstützfunktion des Filterelementes am aufnehmenden Filtergehäuse zu.

Sofern mindestens zwei Haltelaschen angeordnet sind, die an dem gleichen Dichtungsmaterialstreifen, jedoch in Umfangsrichtung versetzt positioniert sind, kann es zweckmäßig sein, diese beiden Haltelaschen in der Weise anzuordnen, dass eine Verbindungslinie zwischen den Haltelaschen eine Achse durch den Schwerpunkt des Filterelementes schneidet oder zumindest nahe an der Schwerpunktachse liegt. Hierdurch ist sichergestellt, dass bei einem gleichzeitigen Ergreifen des Filterelementes über die beiden Haltelaschen das Filterelement in einer balancierten bzw. austarierten Weise angehoben und abgesenkt werden kann und ein unerwünschtes Verkanten des Filterelementes vermieden wird, das zu einem erschwerten Einsetzen bzw. Entnehmen des Filterelementes führen würde.

Erfindungsgemäß sind der Dichtungsmaterialstreifen und die mindestens zwei Haltelaschen einteilig ausgebildet. Dementsprechend besteht auch die Haltelasche aus dem gleichen Dichtungsmaterial wie der Dichtungsmaterialstreifen. In einer nicht erfindungsgemäßen Ausführung sind Dichtungsmaterialstreifen und Haltelaschen separat ausgebildet, jedoch miteinander verbunden, so dass auch in diesem Fall die Kräfte, die beim Entnehmen und Einsetzen auf die Haltelasche wirken, auf den Dichtungsmaterialstreifen und weiter auf den Filtermediumkörper übertragen werden.

Erfindungsgemäß steht der Dichtungsmaterialstreifen seitlich über die Außenseite des Filtermediumkörpers über. Die Haltelaschen weisen dagegen zum Außenrand des Dichtungsmaterialstreifens einen Abstand auf, so dass die Haltelaschen in Bezug auf den Filtermediumkörper nicht überstehen, sondern sich benachbart zum Randbereich des Filtermediumkörpers befinden. Diese Ausführung stellt sicher, dass mit dem Ergreifen des Filterelementes an den mindestens zwei Haltelaschen die Kräfte unter Vermeidung zusätzlicher Momente unmittelbar über den Dichtungsmaterialstreifen in den Filtermediumkörper eingeleitet werden.

Der überstehende Abschnitt des Dichtungsmaterialstreifens kann mit einer nach unten gerichteten Aufnahmenut versehen sein, in die ein Dichtungselement einsetzbar ist. Die offene Seite der Aufnahmenut ist der gegenüberliegenden Seite des Filtermediumkörpers zugewandt und weist vorzugsweise einen seitlichen Abstand zur benachbarten Außenseite des Filtermediumkörpers auf.

Erfindungsgemäß ist der Filtermediumkörper als Faltenfilter mit einer Vielzahl einzelner Filterfalten ausgebildet. Der Dichtungsmaterialstreifen erstreckt sich zumindest abschnittsweise quer zu den Filterfalten entlang des Randbereiches des Filtermediumkörpers. Mindestens ein Abschnitt des Dichtungsmaterialstreifens verläuft hierbei quer zu den Filterfalten, wobei mindestens eine Haltelasche an diesem Abschnitt des Dichtungsmaterialstreifens angeordnet ist. Aufgrund der Querrichtung des Dichtungsmaterialstreifens bezogen auf die Filterfalten wird der Filtermediumkörper von dem Dichtungsmaterialstreifen stabilisiert und verteilen sich die beim Entnehmen und Einsetzen über die Haltelasche ausgeübten Kräfte auf eine größere Anzahl von Filterfalten.

Der Dichtungsmaterialstreifen ist auf den Filtermediumkörper aufgebracht und nimmt bei der erfindungsgemäßen Ausführung des Filtermediumkörpers als Faltenfilter die Faltenspitzen auf. Das Dichtungsmaterial kann aufgespritzt oder angegossen werden, wodurch eine feste Verbindung zwischen dem Dichtungsmaterialstreifen und dem Filtermaterial des Filtermediumkörpers entsteht.

Gemäß noch einer weiteren zweckmäßigen Ausführung ist mindestens eine Kleberaupe auf die Faltenspitzen aufgebracht, die quer zu den Filterfalten verläuft. Die Kleberaupe verläuft insbesondere parallel zu dem Abschnitt des Dichtungsmaterialstreifens, der mindestens eine Haltelasche aufnimmt. Gemäß einer weiteren vorteilhaften Ausführung verläuft unterhalb des Dichtungsmaterialstreifens ebenfalls eine Kleberaupe.

Der Filtermediumkörper ist, gemäß weiterer zweckmäßiger Ausführung, quaderförmig ausgebildet, d. h. die Grundfläche des Filtermediumkörpers ist im Wesentlichen rechteckig, bzw. hat der Filtermediumkörper einen im Wesentlichen rechteckigen Querschnitt. Der Dichtungsmaterialstreifen ist in dieser Ausführung zweckmäßig auch im Wesentlichen rechteckig ausgebildet.

Die Erfindung bezieht sich auf eine Filtereinrichtung mit einem vorbeschriebenen Filterelement und mit einem Filtergehäuse, das zur Aufnahme des Filterelementes dient. Das Filtergehäuse umfasst insbesondere ein Filtergrundgehäuse sowie einen auf das Filtergrundgehäuse aufsetzbaren Gehäusedeckel. In ein Gehäusebauteil, insbesondere in den Gehäusedeckel, sind Ausnehmungen zur Aufnahme der Haltelaschen eingebracht, die sich an dem Filterelement befinden. Sofern mehrere Haltelaschen am Filterelement angeordnet sind, sind entsprechend mehrere Ausnehmungen in das Gehäusebauteil eingebracht. Mit dem Aufsetzen des Gehäusedeckels auf das Filtergrundgehäuse gelangen die Haltelaschen in Eingriff mit den Ausnehmungen im Gehäusedeckel.

Gemäß einer weiteren zweckmäßigen Ausführung beträgt die Höhe bzw. der Überstand der Haltelaschen über den Dichtungsmaterialstreifen in Bezug zur Gesamthöhe des Filterelementes 5 % bis 20 %. Die Höhe bzw. der Überstand der Laschen liegt beispielsweise in einem Bereich zwischen 10 mm und 40 mm, insbesondere bei 20 mm. Die Länge der Laschen in Richtung der Längserstreckung des tragenden Dichtungsmaterialstreifens liegt zum Beispiel bei 15 mm bis 60 mm und unmittelbar an dem Verbindungsbereich zum Dichtungsmaterialstreifen beispielsweise bei 40 mm. Die Breite der Laschen, quer zur Länge gesehen, liegt beispielsweise zwischen 3 mm und 15 mm, insbesondere bei 6 mm bis 10 mm.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in Explosionsdarstellung eine Filtereinrichtung zur Gasfiltration, mit einem in ein Filtergrundgehäuse einsetzbaren, quaderförmigen Filterelement und einem aufsetzbaren Gehäusedeckel,
- Fig. 2: ein Filterelement in perspektivischer Einzeldarstellung,
- Fig. 3: ein weiteres Filterelement, dargestellt in einer anderen perspektivischen Ansicht,
- Fig. 4: einen Schnitt durch den Randbereich eines Filterelement mit einem Dichtungsmaterialstreifen, der ein Dichtungselement bildet.

In den Figuren sind gleiche Bauteile mit gleichen Bezugszeichen versehen.

### Ausführungsform(en) der Erfindung

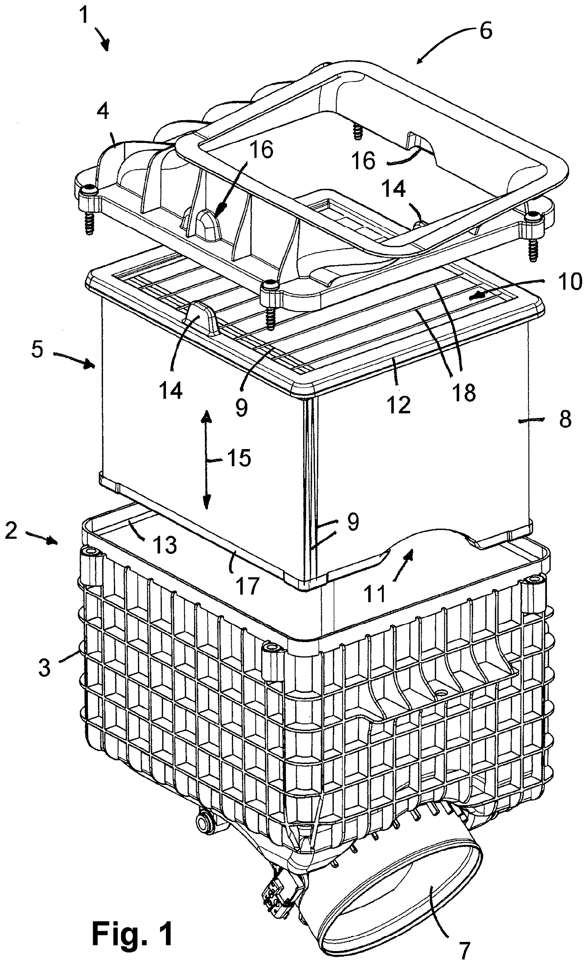

In Fig. 1 ist eine Filtereinrichtung 1 dargestellt, die zur Gasfiltration, insbesondere zur Luftfiltration im Ansaugtrakt einer Brennkraftmaschine eingesetzt werden kann. Die Filtereinrichtung 1 umfasst ein Filtergehäuse 2 mit einem Filtergrundgehäuse 3, einem aufsetzbaren Gehäusedeckel 4, wobei in das Filtergrundgehäuse 3 ein quaderförmiges Filterelement 5 einsetzbar ist, an dem die Filtration stattfindet. Der Gehäusedeckel 4 wird nach dem Einsetzen des Filterelementes 5 auf das Filtergrundgehäuse 3 aufgesetzt und mit diesem verschraubt, wodurch das Filterelement 5 verliersicher im Filtergrundgehäuse 3 gehalten ist. Die Zuführung des ungereinigten Rohfluids erfolgt über eine zentrale Öffnung 6 im Gehäusedeckel 4, die Abströmung des gereinigten Fluids erfolgt über ein Abströmrohr 7 an der Unterseite des Filtergrundgehäuses 3.

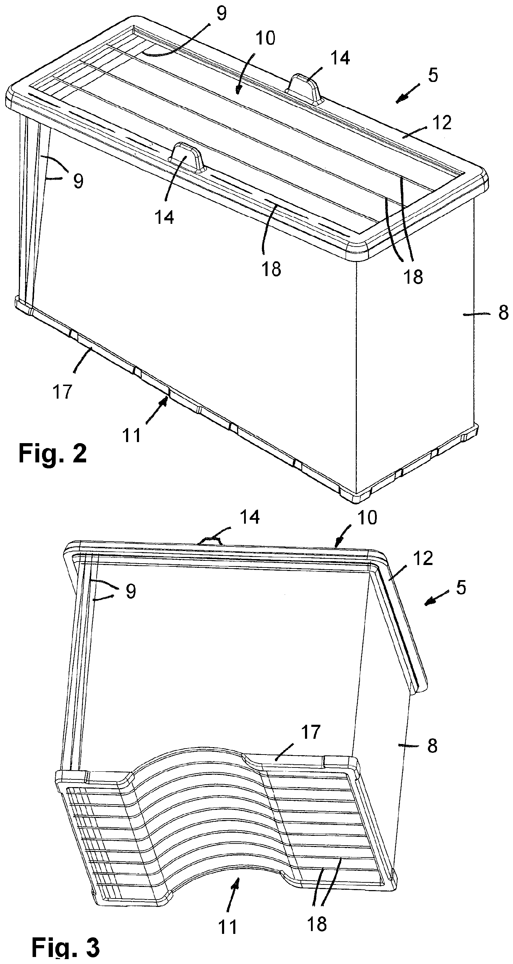

Wie Fig. 1 in Verbindung mit Fig. 2 und 3 zu entnehmen, weist das quaderförmige Filterelement 5 einen Filtermediumkörper 8 auf, der als Faltenfilter mit einer Vielzahl von Filterfalten 9 ausgebildet ist. Die Filterfalten 9 erstrecken sich zwischen der oben liegenden Anströmseite 10 des Filterelementes 5, die dem Gehäusedeckel 4 zugewandt ist, und der gegenüberliegenden, unten liegenden Abströmseite 11, die dem Abströmrohr 7 im Filtergrundgehäuse 3 zugewandt ist. Dementsprechend liegen die Faltenspitzen der Filterfalten 9 an der Anströmseite 10 und der Abströmseite 11.

An der Anströmseite 10 ist der Randbereich des Filtermediumkörpers 8 von einem Dichtungsmaterialstreifen 12 eingefasst, der durchgehend und umlaufend ausgebildet ist. Der Dichtungsmaterialstreifen 12 an der Anströmseite 10 bildet ein Dichtungselement zur strömungsdichten Separierung der Anström- von der Abströmseite. Der Dichtungsmaterialstreifen 12 steht seitlich über die Außenseite des Filtermediumkörpers 8 über, wobei der seitlich nach außen überstehende Bereich des Dichtungsmaterialstreifens 12 eine Auflagefläche zur Auflage an einem innen liegenden, umlaufenden Absatz 13 (Fig. 1) im Filtergrundgehäuse 3 bildet.

An dem Dichtungsmaterialstreifen 12 an der Anströmseite 10 sind in gegenüberliegenden Abschnitten Haltelaschen 14 angeformt, die einteilig mit dem Dichtungsmaterialstreifen 12 ausgebildet sind. Die Haltelaschen 14 erstrecken sich parallel zur Einschub- und Entnahmerichtung 15 (Fig. 1), in der das Filterelement 5 in das Filtergrundgehäuse 3 hineingesetzt bzw. aus diesem herausgenommen wird. Die Haltelaschen 14 stehen über die Oberseite des Dichtungsmaterialstreifens 12 über. Beide Haltelaschen 14 weisen einen seitlichen Abstand zum Außenrand des Dichtungsmaterialstreifens 12 auf und befinden sich mittig am Filterelement 5. Die Haltelaschen 14 sind zumindest teilweise aus dem Material des Dichtungstreifens ausgebildet, insbesondere bestehen die Haltelaschen 14 aus dem Material des Dichtungsstreifens.

Jeder Haltelasche 14 ist eine Ausnehmung 16 an der Unterseite des Gehäusedeckels 4 zugeordnet. Im zusammengebauten Zustand ragen die Haltelaschen 14 in die zugeordneten Ausnehmungen 16 im Gehäusedeckel 4 ein.

Im Ausführungsbeispiel gemäß Fig. 1 befinden sich die Haltelaschen 14 an einem Abschnitt des Dichtungsmaterialstreifens 12, der parallel zu den Filterfalten 9 verläuft. Im Ausführungsbeispiel gemäß Fig. 2 liegen dagegen die Haltelaschen 14 an einem Abschnitt des umlaufenden Dichtungsmaterialstreifens 12, der orthogonal bzw. quer zu den Filterfalten 9 verläuft. Die Ausführung gemäß Fig. 2 hat den Vorteil, dass sich die Haltekräfte, die von den Haltelaschen 14 ausgehen, über den zugeordneten Abschnitt des Dichtungsmaterialstreifens 12 auf eine Vielzahl einzelner Filterfalten 9 verteilt.

Auch an der Abströmseite 11 befindet sich im Randbereich des Filtermediumkörpers 8 ein Dichtungsmaterialstreifen 17. Dieser besteht insbesondere aus dem gleichen Dichtungsmaterial wie der Dichtungsmaterialstreifen 12 an der Anströmseite 10. In den Ausführungsbeispielen gemäß den Fig. 1 und 3 ist der Dichtungsmaterialstreifen 17 an der Abströmseite 11 nicht durchgehend ausgebildet, sondern zweiteilig und weist in der Mitte des Filtermediumkörpers an zwei Seiten jeweils eine Unterbrechung auf. Im Ausführungsbeispiel gemäß Fig. 2 ist dagegen der Dichtungsmaterialstreifen 17 an der Abströmseite 11 umlaufend und durchgehend ausgebildet.

Sowohl an der Anströmseite 10 als auch an der Abströmseite 11 befinden sich Klebe- bzw. Leimraupen 18, die sich jeweils quer zu den Filterfalten 9 erstrecken. An der Anströmseite 10 und an der Abströmseite 11 sind jeweils eine Mehrzahl parallel verlaufender Kleberaupen 18 angeordnet. Die Kleberaupen 18 bewirken eine Stabilisierung und Steifigkeitserhöhung des Filtermediumkörpers 8. Wie mit strichlierter Linie in Fig. 2 eingetragen, kann auch unterhalb des Abschnittes des Dichtungsmaterialstreifens 12 an der Anströmseite 10, der eine Haltelasche 14 trägt, eine Kleberaupe 18 angeordnet sein.

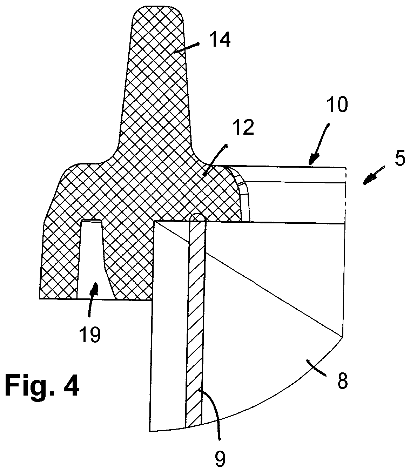

Wie der Schnittdarstellung gemäß Fig. 4 zu entnehmen, ist in den Dichtungsmaterialstreifen 12 an der Anströmseite 10 eine nach unten gerichtete Aufnahmenut 19 eingebracht, die sich in einem Abschnitt des Dichtungsmaterialstreifens 12 mit seitlichem Abstand zur Außenseite des Filtermediumkörpers 8 befindet. Die offene Seite der Aufnahmenut 19 liegt der Haltelasche 14 gegenüber. Die Aufnahmenut 19 dient zur Aufnahme des innen liegenden, umlaufenden Absatzes 13 (Fig. 1) im Filtergrundgehäuse 3, insbesondere zur Aufnahme eines umlaufenden Dichtungselements, das beim Einsetzen des Filterelementes 5 auf den Absatz 13 an der Innenseite des Filtergrundgehäuses 3 aufgesetzt wird.

## Patentansprüche

1. Filtereinrichtung mit einem Filterelement (5) und mit einem Filtergehäuse (2) zur Aufnahme des Filterelements (5), wobei das Filterelement (5) einen Filtermediumkörper (8) aufweist, der als Faltenfilter mit einer Vielzahl einzelner Filterfalten (9) ausgebildet ist und der an der Anströmseite (10) und an mindestens einer weiteren Seite jeweils einen mindestens teilweise umlaufenden Dichtungsmaterialstreifen (12, 17) aufweist, wobei mindestens ein Dichtungsmaterialstreifen (12) im Randbereich des Filtermediumkörpers (8) angeordnet ist und seitlich über die Außenseite des Filtermediumkörpers (8) übersteht, wobei mindestens ein Dichtungsmaterialstreifen (12) Träger von mindestens zwei in Entnahmerichtung des Filterelements (5) über den Dichtungsmaterialstreifen (12) überstehenden Haltelaschen (14) ist, welche zum Ergreifen des Filterelements (5) ausgebildet sind, **dadurch gekennzeichnet, dass** ein Abschnitt des Dichtungsmaterialstreifens (12) quer zu den Filterfalten (9) verläuft und die Haltelaschen (14) mit Abstand zum Außenrand des Dichtungsmaterialstreifens (12) an diesem Abschnitt angeordnet sind und in Bezug auf den Filtermediumkörper (8) nicht überstehen und wobei die Haltelaschen (14) aus dem Material des Dichtungsmaterialstreifens (12) bestehen und einteilig mit dem Dichtungsmaterialstreifen (12) ausgebildet sind, und dass in ein Gehäusebauteil Ausnehmungen (16) zur Aufnahme der Haltelaschen (14) eingebracht sind.

2. Filtereinrichtung nach Anspruch 1, **dadurch gekennzeichnet, dass** die Haltelaschen (14) an einer Seite des Filtermediumkörpers (8) mit durchgehendem Dichtungsmaterialstreifen (12) angeordnet sind.

3. Filtereinrichtung nach einem Ansprüche 1 oder 2, **dadurch gekennzeichnet, dass** die Ausnehmungen (16) zur Aufnahme der Haltelaschen (14) in einen Gehäusedeckel (4) eingebracht sind.

4. Filtereinrichtung nach einem der Ansprüche 1 bis 3, **dadurch gekennzeichnet, dass** an der Anströmseite (10) ein vollständig umlaufender Dichtungsmaterialstreifen (12) angeordnet ist.

5. Filtereinrichtung nach einem der Ansprüche 1 bis 4, **dadurch gekennzeichnet, dass** an der Abströmseite (11) ein mindestens teilweise umlaufender Dichtungsmaterialstreifen (17) angeordnet ist.

6. Filtereinrichtung nach einem der Ansprüche 1 bis 5, **dadurch gekennzeichnet, dass** an den Faltenspitzen mindestens eine Kleberaupe (18) quer zu den Filterfalten (9) verläuft.

7. Filtereinrichtung nach einem der Ansprüche 1 bis 6, **dadurch gekennzeichnet, dass** eine Kleberaupe (18) unterhalb des Dichtungsmaterialstreifens (12) verläuft.

8. Filtereinrichtung nach einem der Ansprüche 1 bis 7, **gekennzeichnet durch** eine quaderförmige Ausbildung des Filtermediumkörpers (8).

9. Filtereinrichtung nach einem der Ansprüche 1 bis 8, **dadurch gekennzeichnet, dass** der Dichtungsmaterialstreifen (12) an der Anströmseite (10) eine von der Anströmseite (10) aus nach unten gerichtete Aufnahmenut (19) aufweist, insbesondere ist die Aufnahmenut (19) in einem Abschnitt des Dichtungsmaterialstreifens (12) mit seitlichem Abstand zur Außenseite des Filtermediumkörpers (8) angeordnet, vorzugsweise liegt die offene Seite der Aufnahmenut (19) in Richtung der Anströmseite (10) von der Haltelasche (14) abgewandt.

10. Verwendung einer Filtereinrichtung nach einem der Ansprüche 1 bis 9 zur Gasfiltration, insbesondere als Luftfilter.

## Claims

1. Filtering device with a filter element (5) and with a filter housing (2) for accommodating the filter element (5), wherein the filter element (5) features a filter medium body (8) designed as folded filter with a plurality of individual filter folds (9) and featuring on the inflow side (10) and at least on another side each an at least partially circumferential sealing compound strip (12, 17), wherein at least one sealing compound strip (12) is disposed in the peripheral area of the filter medium body (8) and projects laterally beyond the exterior side of the filter medium body (8), wherein at least one sealing compound strip (12) is the carrier of at least two retaining tabs (14) which project beyond the sealing compound strip (12) in the withdrawal direction of the filter element (5) and are designed to grip the filter element (5), **characterized in that** a portion of the sealing compound strip (12) extends transversely to the filter folds (9) and the retaining tabs (14) are disposed at a distance from the outer edge of the sealing compound strip (12) at this portion and do not project with regard to the filter medium body (8) and wherein the retaining tabs (14) are made of the material of the sealing compound strip (12) and designed in one piece with the sealing compound strip (12), and that recesses (16) for accommodating the retaining tabs (14) are realized in a housing component.

2. Filtering device according to claim 1, **characterized in that** the retaining tabs (14) are disposed on one side of the filter medium body (8) with continuous sealing compound strips (12).

3. Filtering device according to one of the claims 1 or 2, **characterized in that** the recesses (16) for accommodating the retaining tabs (14) are incorporated into a housing cover (4).

4. Filtering device according to one of the claims 1 to 3, **characterized in that** a completely circumferential sealing compound strip (12) is disposed on the inflow side (10).

5. Filtering device according to one of the claims 1 to 4, **characterized in that** an at least partially circumferential sealing compound strip (17) is disposed on the inflow side (10).

6. Filtering device according to one of the claims 1 to 5, **characterized in that** at least one adhesive bead (18) extends on the fold tips transversely to the filter folds (9).

7. Filtering device according to one of the claims 1 to 6, **characterized in that** at least one adhesive bead (18) extends underneath the sealing compound strip (12).

8. Filtering device according to one of the claims 1 to 7, **characterized by** a cuboid-shaped design of the filter medium body (8).

9. Filtering device according to one of the claims 1 to 8, **characterized in that** the sealing compound strip (12) features on the inflow side (10) a receiving groove (19) directed downward from the inflow side (10), in particular, the receiving groove (19) is disposed in a portion of the sealing compound strip (12) with a lateral distance from the exterior side of the filter medium body (8), preferably, the open side of the receiving groove (19) lies in the direction of the inflow side (10) facing away from the retaining tab (14).

10. Use of a filtering device according to one of the claims 1 to 9 for gas filtration, in particular as air filter.

## Revendications

1. Dispositif de filtration avec un élément filtrant (5) et avec un boîtier de filtre (2) destiné à recevoir l'élément filtrant (5), l'élément filtrant (5) présentant un corps de milieu filtrant (8) conçu en tant que filtre à plis avec une pluralité de plis de filtre individuels (9) et présentant sur le côté amont (10) et sur au moins un autre côté respectivement une bande de matériau d'étanchéité au moins partiellement périphérique (12, 17), au moins une bande de matériau d'étanchéité (12) étant disposée dans la zone périphérique du corps de milieu filtrant (8) et dépassant latéralement de la face extérieure du corps de milieu filtrant (8), au mois une bande de matériau d'étanchéité (12) étant le support d'au moins deux pattes de maintien (14) dépassant de la bande de matériau d'étanchéité (12) dans le sens du prélèvement de l'élément filtrant (5) et qui sont conçues pour saisir l'élément filtrant (5), **caractérisé en ce qu'**une section de la bande de matériau d'étanchéité (12) évolue en travers des plis de filtre (9) et les pattes de maintien (14) sont disposées à distance du bord extérieur de la bande de matériau d'étanchéité (12) sur cette section et ne dépassent pas par rapport au corps de milieu filtrant (8) et les pattes de maintien (14) étant constituées du matériau de la bande de matériau d'étanchéité (12) et conçues d'un seul tenant avec la bande de matériau d'étanchéité (12), et que des évidements ( 16) destinés à recevoir les pattes de maintien (14) sont réalisés dans un composant de boîtier.

2. Dispositif de filtration selon la revendication 1, **caractérisé en ce que** les pattes de maintien (14) sont disposées sur un côté du corps de milieu filtrant (8) avec une bande de matériau d'étanchéité (12) continue.

3. Dispositif de filtration selon l'une quelconque des revendications 1 ou 2, **caractérisé en ce que** les évidements (16) destinés à recevoir les pattes de maintien (14) sont réalisés dans un couvercle de boîtier (4).

4. Dispositif de filtration selon l'une quelconque des revendications 1 à 3, **caractérisé en ce qu'**une bande de matériau d'étanchéité (12) entièrement périphérique est disposée sur le côté amont (10).

5. Dispositif de filtration selon l'une quelconque des revendications 1 à 4, **caractérisé en ce qu'**une bande de matériau d'étanchéité (17) au moins partiellement périphérique est disposée sur le côté aval (11).

6. Dispositif de filtration selon l'une quelconque des revendications 1 à 5, **caractérisé en ce qu'**au niveau des crêtes de plis au moins un ruban adhésif (18) évolue transversalement aux plis de filtre (9).

7. Dispositif de filtration selon l'une quelconque des revendications 1 à 6, **caractérisé en ce qu'**un ruban adhésif (18) évolue en dessous de la bande de matériau d'étanchéité (12).

8. Dispositif de filtration selon l'une quelconque des revendications 1 à 7, **caractérisé par** une configuration parallélépipédique du corps de milieu filtrant (8).

9. Dispositif de filtration selon l'une quelconque des revendications 1 à 8, **caractérisé en ce que** la bande de matériau d'étanchéité (12) présente, sur le côté amont (10), une rainure de réception (19) orientée vers le bas à partir du côté amont (10), notamment la rainure de réception (19) est disposée dans une section de la bande de matériau d'étanchéité (12) à une distance latérale de la face extérieure du corps de milieu filtrant (8), de préférence le côté ouvert de la rainure de réception (19) est situé à l'opposé de la patte de maintien (14) en direction du côté amont (10).

10. Utilisation d'un dispositif de filtration selon l'une quelconque des revendications 1 à 9 pour la filtration de gaz, notamment en tant que filtre à air.
